# EUROPEAN PATENT APPLICATION

(11) **EP 3 573 291 A1**
(43) Date of publication of application: **27.11.2019**
(21) Application number: 18189648.1
(22) Date of filing: 20.08.2018
(51) Int. Cl.: H04L 12/403, H04W 74/06, H04W 84/18

(54) **DATA COLLECTION METHOD, DATA TRANSMISSION METHOD, DATA COLLECTION DEVICE AND NETWORK DEVICE**

(30) Priority: 22.05.2018 CN 201810495526
(71) Applicant: Beijing Hanergy Solar Power Investment Co., Ltd., 101499 Beijing (CN)
(72) Inventor: Liu, Xiaoning, Beijing, Beijing 101499 (CN)
(74) Representative: Cohausz & Florack

(57) **Abstract**

The disclosure provides a data collection method, data transmission method, data collection device, and network device. The data collection method comprises acquiring (Step 101) network configuration information; sending (Step 102) a data partition query instruction to network devices corresponding to all the device addresses in a polling manner according to the polling interval; acquiring (Step 103) a data partition query result sent from each of the network devices in response to the data partition query instruction in a different polling interval; and integrating (Step 104) all data packets of each of the network devices according to the data packet sequence number to acquire data in each of the network devices.

## Description

### CROSS-REFERENCE TO RELATED APPLICATIONS

This application claims priority to Chinese Patent Application No. 201810495526.X filed on May 22, 2018 in the State Intellectual Property Office of China, the entire contents of which are incorporated herein by reference.

### FIELD OF THE INVENTION

Embodiments of the present disclosure relate to, but are not limited to, the field of communication technologies, and in particular, to a data collection method, a data transmission method, a data collection device, and a network device.

### BACKGROUND

With the development of economies, the urban size is constantly expanding, and the Internet of Things technology has developed rapidly and has received much attention. There are many communication technologies used in the Internet of Things, including short-range wireless communication technologies. Network devices in the short-range wireless communication network communicate with each other. The network devices may require other network devices to transfer data, resulting in problems of unstable communication and external disturbance.

### SUMMARY

At least one embodiment of the present disclosure provides a data collection method, a data transmission method, a data collection device, and a network device.

In the first aspect, an embodiment of the disclosure provides a data collection method, including steps of: acquiring (Step 101) network configuration information, wherein the network configuration information includes a polling interval and a device address of at least one network device; sending (Step 102) a data partition query instruction to network devices corresponding to all the device addresses in a polling manner according to the polling interval, wherein the data partition query instruction carries the device addresses and a data packet sequence number of a current polling interval; acquiring (Step 103) a data partition query result sent from each of the network devices in response to the data partition query instruction in a different polling interval, wherein the data partition query result carries the data packet sequence number of the current polling interval and a data packet corresponding to the data packet sequence number; and integrating (Step 104) all data packets of each of the network devices according to the data packet sequence number to acquire data of each of the network devices.

In the second aspect, an embodiment of the disclosure provides a data collection device, including: a first acquisition unit (21), configured to acquire network configuration information, wherein the network configuration information includes a polling interval and a device address of at least one network device; a polling unit (22), configured to send a data partition query instruction to network devices corresponding to all device addresses in a polling manner according to the polling interval, wherein the data partition query instruction carries the device addresses and a data packet sequence number of a current polling interval; a second acquisition unit (23), configured to acquire a data partition query result sent from each of the network devices in response to the data partition query instruction in a different polling interval, wherein the data partition query result carries the data packet sequence number of the current polling interval and a data packet corresponding to the data packet sequence number; and an integration unit (24), configured to integrate all data packets of each of the network devices according to the data packet sequence number to acquire data of each of the network devices.

In the third aspect, an embodiment of the disclosure provides a data transmission method, applicable to a network device, including steps of: acquiring (Step 301) a data partition query instruction, wherein the data partition query instruction carries the device addresses and a data packet sequence number of a current polling interval; verifying (Step 302) the device address; extracting (Step 303) the data packet sequence number carried in the data partition query instruction under a condition that a verification succeeds; and sending (Step 304) a data partition query result in response to the data partition query instruction, wherein the data partition query result carries a data packet sequence number of the current polling interval and a data packet corresponding to the data packet sequence number.

In the fourth aspect, an embodiment of the disclosure provides a network device, including: an acquisition unit (41), configured to acquire a data partition query instruction, wherein the data partition query instruction carries the device addresses and a data packet sequence number of a current polling interval; a verification unit (42), configured to verify the device address; an extraction unit (43), configured to extract the data packet sequence number carried in the data partition query instruction after a verification of the verification unit (42) succeeds; and a sending unit (44), configured to send a data partition query result in response to the data partition query instruction, wherein the data partition query result carries a data packet sequence number of the current polling interval and a data packet corresponding to the data packet sequence number.

In the fifth aspect, an embodiment of the disclosure provides a data collection device, including a processor and a storage unit, wherein the storage unit stores at least one executable instruction and the executable instruction is loaded and executed by the processor to perform the data collection method as set forth above.

In the sixth aspect, an embodiment of the disclosure provides a computer readable storage medium storing at least one executable instruction that is loaded and executed by a processor to perform the data collection method as set forth above.

In the seventh aspect, an embodiment of the disclosure provides a network device, including a processor and a storage unit, wherein the storage unit stores at least one executable instruction and the executable instruction is loaded and executed by the processor to perform the data transmission method as set forth above.

In the eighth aspect, an embodiment of the disclosure provides a computer readable storage medium storing at least one executable instruction that is loaded and executed by a processor to perform the data transmission method as set forth above.

### BRIEF DESCRIPTION OF THE DRAWINGS

In order to more clearly illustrate the technical solutions of the embodiments of the present disclosure, the drawings to be used in the description of the embodiments or the prior art will be briefly described below. Obviously, the drawings in the following description are only some of the embodiments of the disclosure. Those skilled in the art can obtain further drawings from those drawings without creative work.
FIG. 1 is a flowchart of a data collection method according to an embodiment of the present disclosure;
FIG. 2a is a structural block diagram of a data collection device according to an embodiment of the present disclosure;
FIG. 2b is a structural block diagram of another data collection device according to an embodiment of the present disclosure;
FIG. 2c is a structural block diagram of still another data collection device according to an embodiment of the present disclosure;
FIG. 2d is a structural block diagram of still another data collection device according to an embodiment of the present disclosure;
FIG. 2e is a structural block diagram of still another data collection device according to an embodiment of the present disclosure;
FIG. 3 is a flowchart of a data transmission method according to an embodiment of the present disclosure;
FIG. 4a is a structural block diagram of a network device according to an embodiment of the present disclosure;
FIG. 4b is a structural block diagram of another network device according to an embodiment of the present disclosure;
FIG. 5 is a flowchart of another data collection method according to an embodiment of the present disclosure;
FIG. 6 is a flowchart of still another data collection method according to an embodiment of the present disclosure;
FIG. 7 is a flowchart of still another data collection method according to an embodiment of the present disclosure;
FIG. 8 is a flowchart of still another data collection method according to an embodiment of the present disclosure;
FIG. 9 is a flowchart of still another data collection method according to an embodiment of the present disclosure; and
FIG. 10 is a flowchart of another data transmission method according to an embodiment of the present disclosure.

### DETAILED DESCRIPTION OF THE EMBODIMENTS

In order that the objectives, technical solutions and advantages of the embodiments of the disclosure become more apparent, the technical solutions in the embodiments of the present disclosure will be clearly and completely described below with reference to the accompanying drawings in the embodiments of the present disclosure. Obviously, the embodiments described herein are some of the embodiments of the present disclosure, but not all of the embodiments. All other embodiments obtained by a person of ordinary skill in the art based on the embodiments of the present disclosure without creative work will fall into the scope of the disclosure.

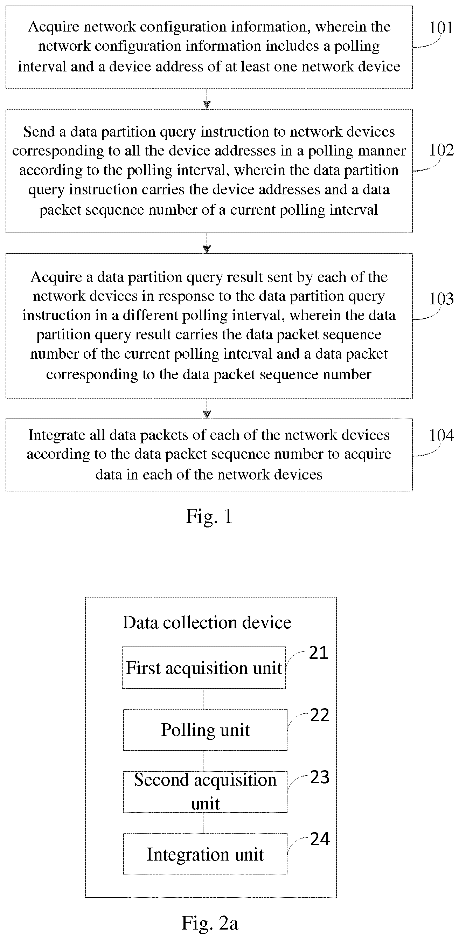

As shown in FIG. 1 , an embodiment of the present disclosure provides a data collection method, including steps of:
Step 101: acquiring network configuration information, wherein the network configuration information includes a polling interval and a device address of at least one network device.

In this embodiment, an execution body of the method may be a data collection device which is applicable to a short-range wireless communication technology of a Zigbee network or other non-Zigbee network. Taking the Zigbee network as an example, the network device is a Zigbee device, which is a device that can perform Zigbee communication in the Zigbee network.

In this embodiment, the network configuration information may be manually configured information. Specifically, the device address of each of the network devices can be obtained by determining the scale of the Zigbee network, that is, the number of network devices included in the Zigbee network.

In this embodiment, the device address adopts a 4-byte IEEE address, which is pre-allocated before the network device joins the network and which is globally unique.

In this embodiment, the device address may also adopt a network address. The network address is an address allocated by a parent node when the network device joins the Zigbee network after the Zigbee network is established. During the communication of the network devices, the network address of the network device is first determined by the IEEE address, and then the communication between the network devices is implemented according to the network address.

In this embodiment, the network configuration information may further include: Zigbee network parameter information such as a Zigbee channel, a unicast channel, and a broadcast channel.

In the embodiment of the present disclosure, the network configuration information further includes the polling interval, which is a time interval, such that the execution body of the method can implement the master-slave one-way communication with the network device in a polling manner. In other words, only when the execution body of the method polls the network device, the network device will feed back a data packet. Therefore, the execution body of the method can directly acquire the data of each of network devices in an orderly manner, thereby improving the stability of communication and reducing the external disturbance.

Step 102: sending a data partition query instruction to network devices corresponding to all the device addresses in a polling manner according to the polling interval, wherein the data partition query instruction carries the device addresses and a data packet sequence number of a current polling interval.

In this embodiment, a period of time for the same network device being polled twice is referred to as a polling period, and the polling period is determined according to the number of network devices to send data packets and the polling interval in the network configuration information.

In this embodiment, since the data packet query is performed only for one network device in each polling interval, the data partition query instruction carries the device address and the data packet sequence number of the current polling interval. Herein, the device address is an address of a network device that is required to be queried by the data partition query instruction, and the data packet sequence number is a data packet sequence number that is required to be queried by the data partition query instruction.

In this embodiment, if the current data packet query is a query for the first time, the data packet sequence number has a default of 1, that is, the first data packet arranged in an order of division after the data of the network device is divided into multiple data packets. If the current data packet query is not the first query, the data packet sequence number carried in the data partition query instruction needs to be determined in advance. In the embodiment of the present disclosure, the data packet sequence number may be determined to add 1 to a data packet sequence number sent when the same network device was last queried. For example, if the current data packet query is a query for the second time, the data packet sequence number will be 2, that is, the second packet arranged in the order of division.

In this embodiment, the data of the network device is divided into multiple data packets, each of which corresponds to a different data packet sequence number. The data packet sequence number indicates a data packet division sequence. There are many ways to divide the data into multiple data packets. The data partition query instruction in each polling interval queries only one packet of one network device. Therefore, the erroneous data packet can be found in time, and a re-query can be made only to the erroneous data packet without retransmission of the entire data, thereby improving data transmission efficiency.

In this embodiment, the data partition query instruction may further carry an instruction function code and a device address of an execution body of the method, and the instruction function code may enable the network device to determine that the received instruction is the data partition query instruction. The device address of the execution body of the method may enable the network device to determine that the data partition query instruction is sent from the execution body of the method.

Step 103: acquiring a data partition query result sent from each of the network devices in response to the data partition query instruction in a different polling interval, wherein the data partition query result carries the data packet sequence number of the current polling interval and a data packet corresponding to the data packet sequence number.

In this embodiment, since the data partition query instruction in each of the polling intervals only queries one data packet of one network device, the data partition query instruction to which each of the network devices responds is a data partition query instruction in a different polling interval. For one polling interval, the network device queried by the data partition query instruction sends the data packet corresponding to the data packet sequence number in the data partition query instruction to the execution body of the method, and also sends the data packet sequence number in the data partition query instruction to the execution body of the method, such that the execution body of the method determines the data packet sequence number corresponding to the received data packet.

In this embodiment, the data partition query result may further carry the device address and a response instruction code of the execution body of the method, such that the execution body of the method determines that the data partition query result is received, and then the data packet sequence number carried in the data partition query result and the data packet corresponding to the data packet sequence number can be extracted.

Step 104: integrating all data packets of each of the network devices according to the data packet sequence number to acquire data in each of the network devices.

In this embodiment, the data packet may be integrated according to the data packet sequence number carried in the data partition query result.

In this embodiment, useful data in all the data packets of the network devices is integrated according to the data packet sequence number, and useless data in the data packets is removed, for example, packet header data in the data packets is removed, to obtain the data of the network devices.

The data collection method according to the embodiment of the present disclosure implements a master-slave one-way communication with a network device in a polling manner, and can directly acquire data of each of the network devices in an orderly manner, thereby improving the stability of communication and reducing the external disturbance.

Further, the data collection method according to the embodiment of the present disclosure can divide the data of the network device into multiple data packets by using a data partition technology, wherein each of data packets corresponds to a different data packet sequence number, and data partition query instruction in each of polling intervals queries only one data packet of one network device. Therefore, the data collection method according to the embodiment of the present disclosure can detect an erroneous data packet in time, thereby improving the data transmission efficiency.

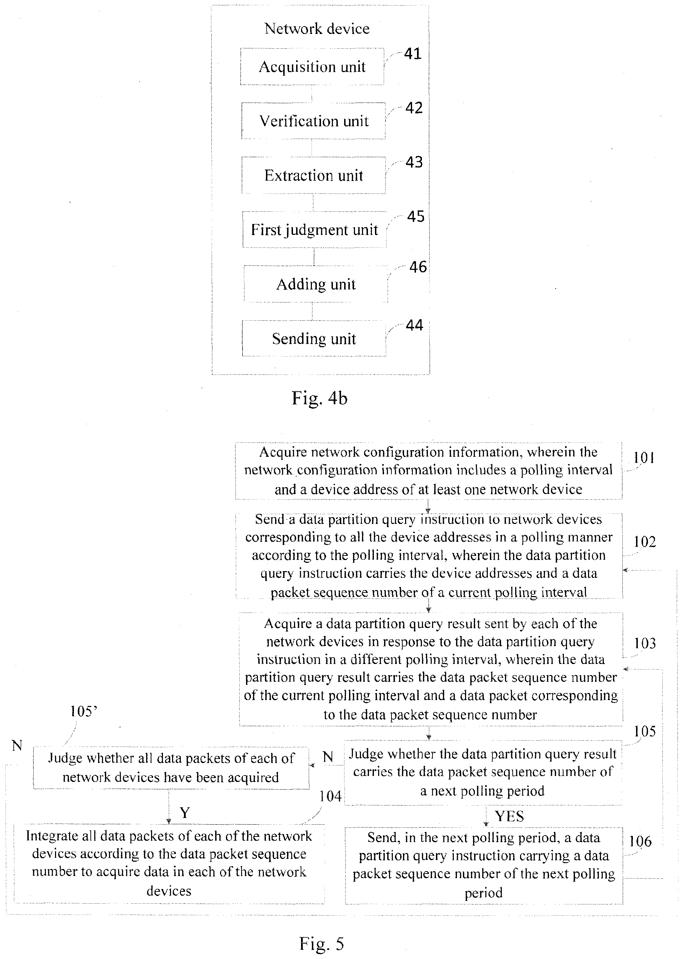

In a specific embodiment, as shown in FIG. 5, after Step 103, the data collection method may further include steps of:
Step 105: judging whether the data partition query result carries the data packet sequence number of a next polling period, wherein if yes, executing Step 106; or if not, determining that all data packets of the network device that sends the data partition query result have been acquired and executing Step 105';
Step 105': judging whether all data packets of each of network devices have been acquired, wherein if all data packets of each of network devices have been acquired, execute Step 104; or if all data packets of each of network devices are not acquired, then return to Step 102, until all data packets of each of network devices have been obtained; and
Step 106: sending, in the next polling period, a data partition query instruction carrying a data packet sequence number of the next polling period.

In this embodiment, the Step 106 specifically includes: sending, in the same polling interval of the next polling period of the network device, the data partition query instruction that carries the data packet sequence number of the next polling period. After the Step 106, the data collection method re-executes the Step 103 until the data partition query result does not carry the data packet sequence number of the next polling period.

In this embodiment, if the current data packet query is not the first query, the data packet sequence number carried in the data partition query instruction needs to be determined in advance. As described above, the data packet sequence number is determined to add 1 to a data packet sequence number sent when the same network device was last queried. However, if the network device has sent all the data packets, the network device, after receiving the data partition query instruction, will not feedback the data packet to increase a signaling overheads. Therefore, in this embodiment, after the network device receives the data partition query instruction and determines the data packet of the current query, the data collection method may judge the presence of data packets that have not been obtained. If yes, the network device adds the data packet sequence number of the next polling period (the data packet sequence number that should be queried next time) to the data partition query result, such that the execution body of the method can determine that the network device still has follow-up packets. The data packet sequence number of the next polling period is a next data packet sequence number corresponding to a data packet sequence number carried in the data partition query instruction. The next data packet sequence number is a data packet sequence number carried in the data partition query instruction plus 1.

In a specific embodiment, the network configuration information in Step 101 may further include: the number of data partition query retries.

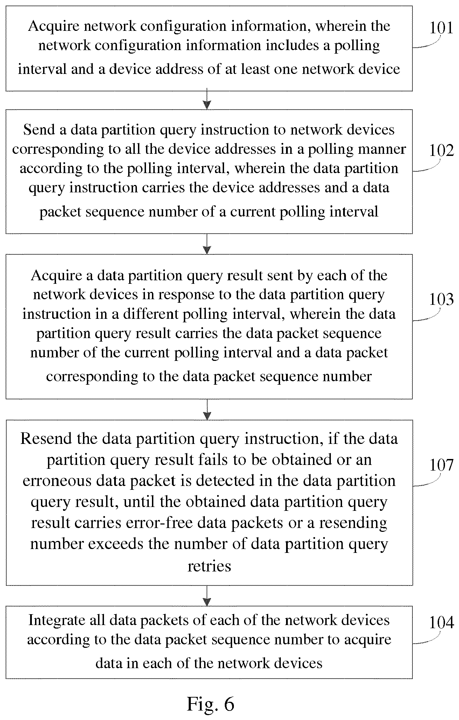

Accordingly, as shown in FIG. 6, between the Step 103 and the Step 104, the data collection method may further include:
Step 107: if the data partition query result fails to be obtained or an erroneous data packet is detected in the data partition query result, re-sending the data partition query instruction until the obtained data partition query result carries error-free data packets or a resending number exceeds the number of data partition query retries.

In this embodiment, the data partition query instruction is resent in the same polling interval until the data packet carried in the obtained data partition query result is error-free or the resending number exceeds the number of data partition query retries.

In a specific embodiment, the network configuration information in the Step 101 may further include: a data collection time range.

In this embodiment, taking into consideration a different amount of data generated by the network in different time ranges, if data is still collected during idle time, software and hardware resources will be wasted due to the small amount of data during idle time. Therefore, in order to save the hardware and software resources and improve the data collection efficiency, in this embodiment, the network configuration information may further include the data collection time range. Data collection is performed within the data collection time range, and data collection is stopped outside the data collection time range.

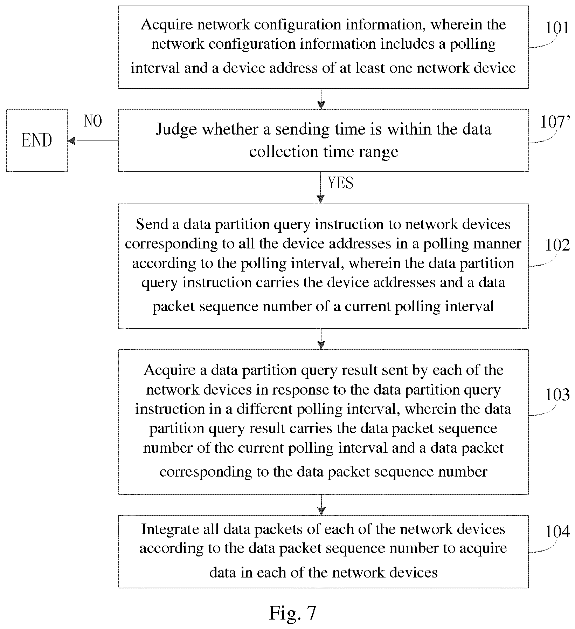

Accordingly, as shown in FIG. 7, between step 101 and step 102, the data collection method may further include:
Step 107': judging whether a sending time is within the data collection time range, wherein if yes, executing the Step 102 of sending the data partition query instruction; otherwise, the data collection process ends without executing the Step 102 of sending the data partition query instruction. The sending time is a sending time of sending the data partition query instruction in a polling manner at the Step 102.

It should be noted that the data collection time range may be determined according to an actual application scenario. For example, 9:00 am to 9:00 pm may be selected as the data collection time range. This embodiment does not limit specific values of the data collection time range.

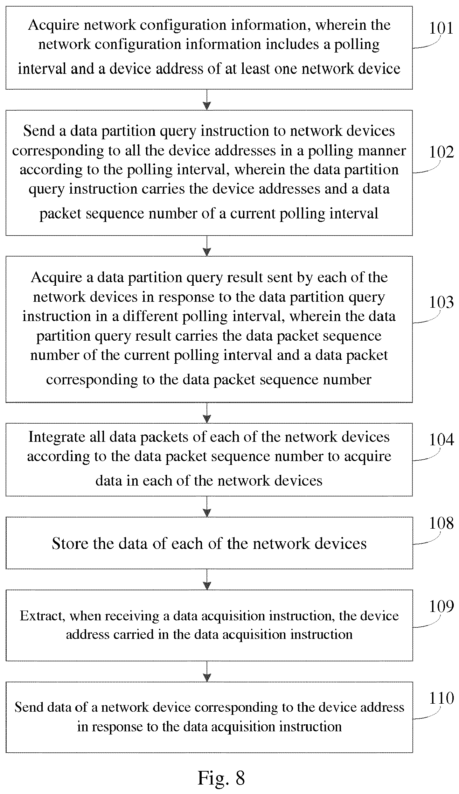

In a specific embodiment, as shown in FIG. 8, after the Step 104, the data collection method may further include steps of:
Step 108: storing the data of each of the network devices;
Step 109: extracting, when receiving a data acquisition instruction, the device address carried in the data acquisition instruction; and
Step 110: sending data of a network device corresponding to the device address in response to the data acquisition instruction.

In this embodiment, the data acquisition instruction may be sent from other network devices in the Zigbee network or by a device or a host computer of the non-Zigbee network that is in communication with the execution body of the method.

In this embodiment, the Step 110 specifically includes: searching the stored data of all the network devices for data of the network device corresponding to the device address in response to the data acquisition instruction, and sending the data of the network device corresponding to the device address.

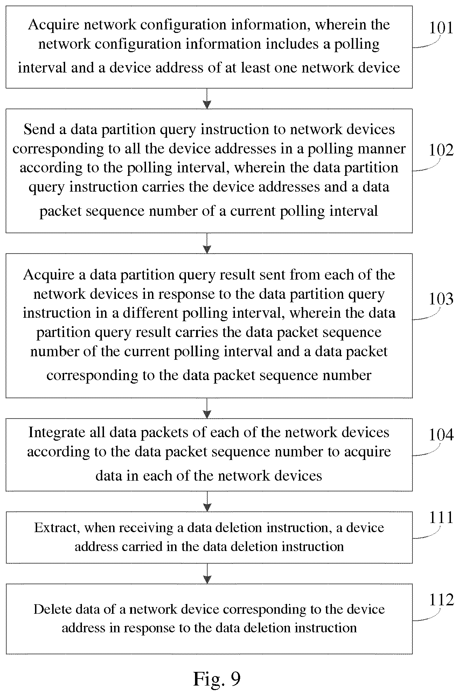

In a specific embodiment, as shown in FIG. 9, after step 104, the data collection method may further include steps of:
Step 111: extracting, when receiving a data deletion instruction, a device address carried in the data deletion instruction; and
Step 112: deleting data of a network device corresponding to the device address in response to the data deletion instruction.

As shown in FIG. 2a, an embodiment of the present disclosure further provides a data collection device corresponding to the data collection method shown in FIG. 1. The data collection device may include: a first acquisition unit 21, a polling unit 22, a second acquisition unit 23, and an integration unit 24.

The first acquisition unit 21 is configured to acquire network configuration information, wherein the network configuration information includes a polling interval and a device address of at least one network device.

The polling unit 22 is configured to send a data partition query instruction to network devices corresponding to all device addresses in a polling manner according to the polling interval, wherein the data partition query instruction carries the device addresses and a data packet sequence number of a current polling interval.

The second acquisition unit 23 is configured to acquire a data partition query result sent from each of the network devices in response to the data partition query instruction in a different polling interval, wherein the data partition query result carries the data packet sequence number of the current polling interval and a data packet corresponding to the data packet sequence number.

The integration unit 24 is configured to integrate all data packets of each of the network devices according to the data packet sequence number to acquire data in each of the network devices.

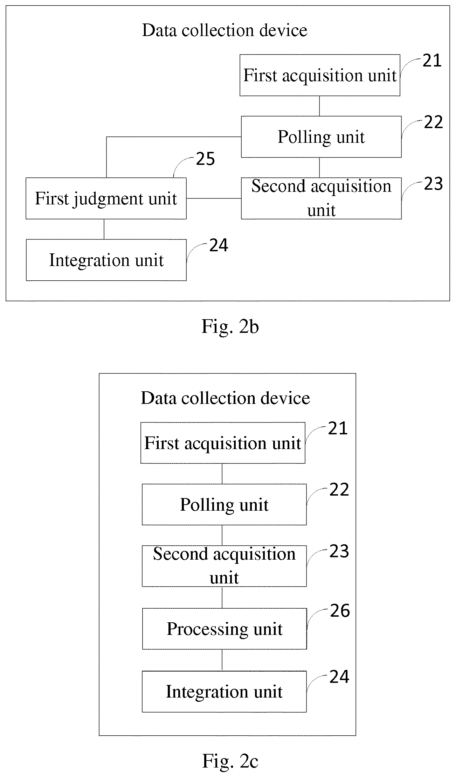

In a specific embodiment, as shown in FIG. 2b, the data collection device may further include a first judgment unit 25, configured to judge whether the data partition query result acquired by the second acquisition unit 23 carries a data packet sequence number of a next polling period, wherein if not, it is determined that all data packets of the network device that sends the data partition query result have been acquired. Therefore, the first judgment unit 25 is further configured to judge whether all data packets of each of the network devices have been acquired.

Accordingly, the polling unit 22 is further configured to, after the first judgment unit 25 determines that all data packets of each network device have not been acquired, send the data partition query instruction to the network devices corresponding to all device addresses in a polling manner according to the polling interval, and after the first judgment unit 25 determines that a data partition query result carries a data packet sequence number of the next polling period, send in the next polling period, the data partition query result carrying the data packet sequence number of the next polling period.

Accordingly, the integration unit 24 is further configured to integrate all the data of each of the network devices according to the data packet sequence number to acquire the data of each of the network devices in the case where the first judgment unit 25 determines that all data packets of each of the network devices have been acquired.

The data collection device shown in FIG. 2b corresponds to the data collection method shown in FIG. 5, the detailed description of which will be omitted herein.

In a specific embodiment, the network configuration information further includes the number of data partition query retries. Accordingly, as shown in FIG. 2c, the data collection device may further include:
a processing unit 26, configured to, after the second acquisition unit 23 fails to acquire the data partition query result or the processing unit 26 detects that the data partition query result carries an erroneous data packet, resend the data partition query instruction until the data partition query result acquired by the second acquisition unit 23 carries error-free data packets or a resending number exceeds the number of data partition query retries.

The data collection device shown in FIG. 2c corresponds to the data collection method shown in FIG. 6, the detailed description of which will be omitted herein.

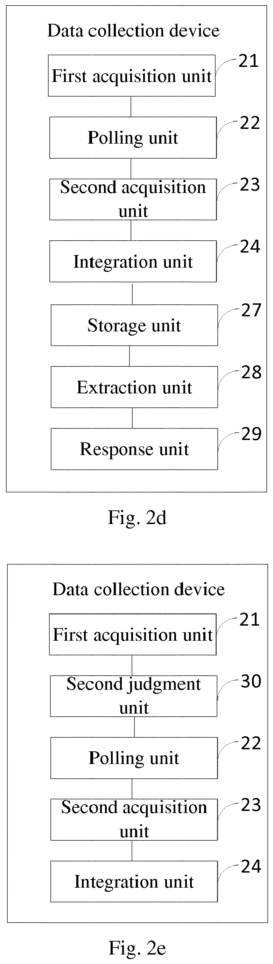

In a specific embodiment, as shown in FIG. 2d, the data collection device may further include: a storage unit 27, an extraction unit 28, and a response unit 29.

The storage unit 27 is configured to store data of each of the network devices after the integration unit 24 acquires the data of each of the network devices.

The extraction unit 28 is configured to extract a device address carried in the data acquisition instruction when receiving the data acquisition instruction.

The response unit 29 is configured to send data of a network device corresponding to the device address in response to the data acquisition instruction.

The data collection device shown in FIG. 2d corresponds to the data collection method shown in FIG. 8, the detailed description of which will be omitted herein.

In a specific example, the network configuration information further includes a data collection time range. Accordingly, as shown in FIG. 2e, the data collection device may further include:
a second judgment unit 30, configured to judge, before the polling unit 22 sends the data partition query instruction, whether a sending time is within the data collection time range.

Accordingly, the polling unit 22 is further configured to send the data partition query instruction after the second judgment unit 30 judges that the sending time is within the data collection time range.

The data collection device shown in FIG. 2e corresponds to the data collection method shown in FIG. 7, the detailed description of which will be omitted herein.

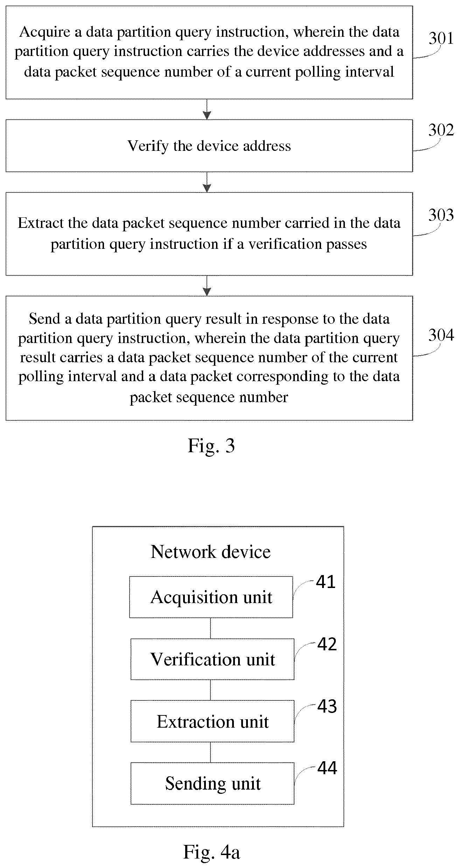

As shown in FIG. 3, an embodiment of the present disclosure further provides a data transmission method, applicable to a network device, and the method may include steps of:
Step 301: acquiring a data partition query instruction, wherein the data partition query instruction carries the device addresses and a data packet sequence number of a current polling interval;
Step 302: verifying the device address;
Step 303: extracting the data packet sequence number carried in the data partition query instruction if a verification succeeds; and
Step 304: sending a data partition query result in response to the data partition query instruction, wherein the data partition query result carries a data packet sequence number of the current polling interval and a data packet corresponding to the data packet sequence number.

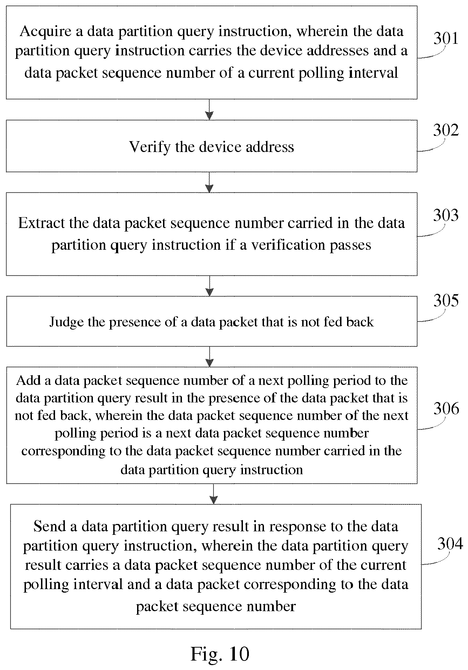

In a specific embodiment, as shown in FIG. 10, between the Step 303 and the Step 304, the data transmission method may further include steps of:
Step 305: judging the presence of a data packet that is not fed back; and
Step 306: adding a data packet sequence number of a next polling period to the data partition query result in the presence of the data packet that is not fed back, wherein the data packet sequence number of the next polling period is a next data packet sequence number corresponding to the data packet sequence number carried in the data partition query instruction.

In this embodiment, the data partition query result sent at the Step 304 is the data partition query result to which the data packet sequence number of the next polling period is added at the Step 306.

The data transmission method disclosed in the above embodiment is a method corresponding to the data collection method disclosed in the embodiments. The effect and the description of the embodiment can refer to the embodiments according to the first aspect. Therefore the description thereof will be omitted in order to avoid repetition.

As shown in FIG. 4a, an embodiment of the present disclosure further provides a network device, including:
an acquisition unit 41, configured to acquire a data partition query instruction, wherein the data partition query instruction carries the device addresses and a data packet sequence number of a current polling interval;
a verification unit 42, configured to verify the device address;
an extraction unit 43, configured to extract the data packet sequence number carried in the data partition query instruction after a verification of the verification unit 42 succeeds; and
a sending unit 44, configured to send a data partition query result in response to the data partition query instruction, wherein the data partition query result carries a data packet sequence number of the current polling interval and a data packet corresponding to the data packet sequence number.

The network device shown in FIG. 4a corresponds to the data transmission method shown in FIG. 3, the detailed description of which will be omitted herein.

In a specific embodiment, as shown in FIG. 4b, the network device further includes a first judgment unit 45 and an adding unit 46.

The first judgment unit 45 is configured to judge, after the extraction unit 43 extracts the data packet sequence number carried in the data partition query instruction, the presence of a data packet that is not fed back.

The adding unit 46 is configured to add, after the first judgment unit 45 determines the presence of the data packet that is not fed back, a data packet sequence number of a next polling period to the data partition query result, wherein the data packet sequence number of the next polling period is a next data packet sequence number corresponding to the data packet sequence number carried in the data partition query instruction.

The network device shown in FIG. 4b corresponds to the data transmission method shown in FIG. 10, the detailed description of which will be omitted herein.

An embodiment of the present disclosure further provides a data collection device, including a processor and a storage unit, wherein the storage unit stores at least one executable instruction, and the executable instruction is loaded and executed by the processor to perform the operations of any one of the above data collection methods.

Another embodiment of the present disclosure further provides a network device, including a processor and a storage unit, wherein the storage unit stores at least one executable instruction, and the executable instruction is loaded and executed by the processor to perform the operations of any one of the above data transmission methods.

The executable instructions described above may be executed, for example, in an operating environment of an embedded Linux system. The processor may include a general-purpose central processing unit (CPU), a microprocessor, an application-specific integrated circuit (ASIC), a digital signal processor (DSP), a digital signal processing device (DSPD), a programmable logic device (PLD), a field programmable gate array (FPGA), a controller, a microcontroller, or multiple integrated circuits for controlling program execution. The storage unit may include a Read-Only Memory (ROM) or other type of static storage device that can store static information and instructions, a Random Access Memory (RAM) or other type of dynamic storage devices that can store information and instructions, the storage unit may also include Electrically Erasable Programmable Read-Only Memory (EEPROM), Compact Disc Read-Only Memory (CD-ROM) or other optical storage and optical disk storage (including compressed optical discs, laser discs, optical discs, digital versatile discs, Blue-ray discs, etc.), magnetic disk storage media or other magnetic storage devices, or any other media that can be used to carry or store desired program code in the form of instructions or data structures and can be accessed by a computer, but not limited thereto. The storage unit can be set up independently or integrated with the processor.

An embodiment of the present disclosure provides a computer readable storage medium storing at least one executable instruction that is loaded and executed by a processor to implement the data collection method as described above.

An embodiment of the present disclosure provides another computer readable storage medium storing at least one executable instruction that is loaded and executed by a processor to implement the data transmission method as described above

The computer readable storage medium may include a Read-Only Memory (ROM) or other type of static storage devices that can store static information and instructions, a Random Access Memory (RAM) or other types of dynamic storage devices that can store information and instructions, or may also include Electrically Erasable Programmable Read-Only Memory (EEPROM), Compact Disc Read-Only Memory (CD-ROM) or other optical storage, optical disc storage (including compact discs, laser discs, optical discs, digital versatile discs, Blue-ray discs, etc.), magnetic disk storage media or other magnetic storage devices, or any other media that can be used to carry or store desired program code in the form of instructions or data structures and can be accessed by a computer, but not limited thereto.

It will be appreciated that the embodiments described herein can be implemented in hardware, software, firmware, middleware, microcode, or a combination thereof. For a hardware implementation, the processing unit can be implemented in one or more Application Specific Integrated Circuit (ASIC), Digital Signal Processing (DSP), DSP Device (DSPD), Programmable Logic Device (PLD), Field-Programmable Gate Array (FPGA), general purpose processor, controller, microcontroller, microprocessor, or any other electronic units or a combination thereof for performing the functions described herein.

For a software implementation, the techniques described herein may be implemented by means of units performing the functions described herein. The software code can be stored in the storage unit and executed by the processor. The storage unit can be implemented in the processor or externally to the processor.

An ordinary person skilled in the art will appreciate that the units and methodic steps of the various examples described in connection with the embodiments disclosed herein can be implemented in electronic hardware, or a combination of computer software and electronic hardware. Whether these functions are implemented in hardware or software could depend on the specific applications and design constraints of the technical solutions. A person skilled in the art can use different methods to implement the described functions for each particular application, but such an implementation should not be considered to be beyond the scope of the present disclosure.

It can be understood that the order of execution can be arbitrarily adjusted unless there is a clear sequence between the steps of the method embodiments. The device embodiments are only schematic. The division of the unit is only a logical function division. In actual implementation, there may be another division manner. For example, multiple units may be combined or integrated into another system, or some features may be ignored or not executed.

It should be noted that the term "comprising" used herein is intended to encompass a non-exclusive inclusion, such that a process, method, article, or device comprising a series of elements includes not only those elements but also other elements which are not explicitly provided herein, or includes elements that are inherent to such a process, method, article, or device.

It should be noted that, in this context, relational terms such as "first" and "second" are used merely to distinguish one entity or operation from another entity or operation, and not necessarily or imply any such actual relationship or order between these entities or operations.

The above are only the optional embodiments of the present disclosure, and are not intended to limit the scope of the present disclosure, and the equivalent structure or equivalent process transformations made by the present disclosure and the contents of the drawings, or directly or indirectly applied to other related technical fields are all included in the scope of the present disclosure for which the patent protection is seeking.

## Claims

1. A data collection method, comprising steps of:
acquiring (101) network configuration information, wherein the network configuration information includes a polling interval and a device address of at least one network device;
sending (102) a data partition query instruction to network devices corresponding to all the device addresses in a polling manner according to the polling interval, wherein the data partition query instruction carries the device addresses and a data packet sequence number of a current polling interval;
acquiring (103) a data partition query result sent from each of the network devices in response to the data partition query instruction in a different polling interval, wherein the data partition query result carries the data packet sequence number of the current polling interval and a data packet corresponding to the data packet sequence number; and
integrating (104) all data packets of each of the network devices according to the data packet sequence number to acquire data of each of the network devices.

2. The method according to claim 1, wherein after acquiring (103) a data partition query result sent from each of the network devices in response to the data partition query instruction in a different polling interval, the method further comprises steps of:
judging (105) whether the data partition query result carries the data packet sequence number of a next polling period, wherein under a condition that the data partition query result carries the data packet sequence number of the next polling period, sending (106), in the next polling period, a data partition query instruction carrying a data packet sequence number of the next polling period, and under a condition that the data partition query result does not carry the data packet sequence number of the next polling period, judging (105') whether all data packets of each of the network devices have been acquired, wherein under a condition that all data packets of each of the network devices have been acquired, executing the step of integrating (104) all data packets of each of the network devices according to the data packet sequence number to acquire data of each of the network devices, and under a condition that all data packets of each of network devices are not acquired, then returning to the step of sending (102) a data partition query instruction to network devices corresponding to all the device addresses in a polling manner according to the polling interval, until all data packets of each of network devices have been obtained, and
after the step of sending (106) the data partition query instruction carrying the data packet sequence number of the next polling period, the method further comprises: re-executing the step of sending (102) the data partition query instruction to network devices corresponding to all the device addresses in a polling manner according to the polling interval, until the data partition query result does not carry the data packet sequence number of the next polling period.

3. The method according to claim 1 or 2, wherein the network configuration information further comprises the number of data partition query retries, and
between the step of acquiring (103) a data partition query result sent from each of the network devices in response to the data partition query instruction in a different polling interval and the step of integrating (104) all data packets of each of the network devices according to the data packet sequence number to acquire data of each of the network devices, the method further comprises: resending (107) the data partition query instruction until the obtained data partition query result carries error-free data packets or a resending number exceeds the number of data partition query retries, under a condition that the data partition query result fails to be obtained or an erroneous data packet is detected in the data partition query result.

4. The method according to any one of claims 1 to 3, wherein the network configuration information further comprises a data collection time range, and between the step of acquiring (101) the network configuration information and the step of sending (102) the data partition query instruction to network devices corresponding to all the device addresses in a polling manner according to the polling interval, the method further comprises: judging (107') whether a sending time is within the data collection time range, wherein under a condition that the sending time is within the data collection time range, then executing the step of sending (102) the data partition query instruction, and
wherein after the step of integrating (104) all data packets of each of the network devices according to the data packet sequence number to acquire data of each of the network devices, the method further comprises steps of:
storing (108) the data of each of the network devices;
extracting (109), when receiving a data acquisition instruction, the device address carried in the data acquisition instruction; and
sending (110) the data of a network device corresponding to the device address in response to the data acquisition instruction.

5. A data collection device, comprising:
a first acquisition unit (21), configured to acquire network configuration information, wherein the network configuration information includes a polling interval and a device address of at least one network device;
a polling unit (22), configured to send a data partition query instruction to network devices corresponding to all device addresses in a polling manner according to the polling interval, wherein the data partition query instruction carries the device addresses and a data packet sequence number of a current polling interval;
a second acquisition unit (23), configured to acquire a data partition query result sent from each of the network devices in response to the data partition query instruction in a different polling interval, wherein the data partition query result carries the data packet sequence number of the current polling interval and a data packet corresponding to the data packet sequence number; and
an integration unit (24), configured to integrate all data packets of each of the network devices according to the data packet sequence number to acquire data of each of the network devices.

6. The data collection device according to claim 5, further comprising:
a first judgment unit (25), configured to judge whether the data partition query result acquired by the second acquisition unit (23) carries a data packet sequence number of a next polling period, wherein under a condition that the data partition query result acquired by the second acquisition unit does not carry the data packet sequence number of the next polling period, the first judgment unit (25)judges whether all data packets of each of the network devices have been acquired,
the polling unit (22) is further configured to, after the first judgment unit (25) determines that all data packets of each network device have not been acquired, send the data partition query instruction to the network devices corresponding to all device addresses in a polling manner according to the polling interval, and after the first judgment unit (25) determines that a data partition query result carries the data packet sequence number of the next polling period, send in the next polling period, the data partition query instruction carrying the data packet sequence number of the next polling period, and
the integration unit (24) is further configured to integrate all the data packets of each of the network devices according to the data packet sequence number to acquire the data of each of the network devices in the case where the first judgment unit (25) determines that all data packets of each of the network devices have been acquired.

7. The data collection device according to claim 5 or 6, wherein the network configuration information further comprises the number of data partition query retries, and
the data collection device further comprises: a processing unit (26), configured to, after the second acquisition unit (23) fails to acquire the data partition query result or the processing unit (26) detects that the data partition query result carries an erroneous data packet, resend the data partition query instruction until the data partition query result acquired by the second acquisition unit (23) carries error-free data packets or a resending number of exceeds the number of data partition query retries.

8. The data collection device according to any one of claims 5-7, wherein the network configuration information further comprises a data collection time range, the data collection device further comprises: a second judgment unit (30), configured to judge, before the polling unit (22) sends the data partition query instruction, whether a sending time is within the data collection time range, and the polling unit (22) is further configured to send the data partition query instruction after the second judgment unit (30) determines that the sending time is within the data collection time range, and
wherein, the data collection device further comprising:
a storage unit (27), configured to store data of each of the network devices after the integration unit (24) acquires the data of each of the network devices;
an extraction unit (28), configured to extract a device address carried in the data acquisition instruction when receiving the data acquisition instruction; and
a response unit (29), configured to send data of a network device corresponding to the device address in response to the data acquisition instruction.

9. A data transmission method, applicable to a network device, comprising steps of:
acquiring (301) a data partition query instruction, wherein the data partition query instruction carries the device addresses and a data packet sequence number of a current polling interval;
verifying (302) the device address;
extracting (303) the data packet sequence number carried in the data partition query instruction under a condition that a verification succeeds; and
sending (304) a data partition query result in response to the data partition query instruction, wherein the data partition query result carries the data packet sequence number of the current polling interval and a data packet corresponding to the data packet sequence number.

10. The method according to claim 9, wherein between the step of extracting (303) the data packet sequence number carried in the data partition query instruction and the step of sending (304) a data partition query result in response to the data partition query instruction, the method further comprises:
judging (305) the presence of a data packet that is not fed back; and
adding (306) a data packet sequence number of the next polling period to the data partition query result in the presence of the data packet that is not fed back, wherein the data packet sequence number of the next polling period is a next data packet sequence number corresponding to the data packet sequence number carried in the data partition query instruction.

11. A network device, comprising:
an acquisition unit (41), configured to acquire a data partition query instruction, wherein the data partition query instruction carries the device addresses and a data packet sequence number of a current polling interval;
a verification unit (42), configured to verify the device address;
an extraction unit (43), configured to extract the data packet sequence number carried in the data partition query instruction after a verification of the verification unit (42) succeeds;
a sending unit (44), configured to send a data partition query result in response to the data partition query instruction, wherein the data partition query result carries the data packet sequence number of the current polling interval and a data packet corresponding to the data packet sequence number;
a first judgment unit (45), configured to judge, after the extraction unit (43) extracts the data packet sequence number carried in the data partition query instruction, the presence of a data packet that is not fed back; and
an adding unit (46), configured to add, after the first judgment unit (45) determines the presence of the data packet that is not fed back, a data packet sequence number of the next polling period to the data partition query result, wherein the data packet sequence number of the next polling period is the next data packet sequence number corresponding to the data packet sequence number carried in the data partition query instruction.

12. A data collection device, comprising a processor and a storage unit, wherein the storage unit stores at least one executable instruction and the executable instruction is loaded and executed by the processor to perform the data collection method according to any one of claims 1 to 4.

13. A computer readable storage medium storing at least one executable instruction that is loaded and executed by a processor to perform the data collection method according to any one of claims 1 to 4.

14. A network device, comprising a processor and a storage unit, wherein the storage unit stores at least one executable instruction and the executable instruction is loaded and executed by the processor to perform the data transmission method according to claim 9 or 10.

15. A computer readable storage medium storing at least one executable instruction that is loaded and executed by a processor to perform the data transmission method according to claim 9 or 10.
